Europäisches Patentamt

European Patent Office

Office européen des brevets

(11) Veröffentlichungsnummer: **0 010 554**
**B1**

(12) **EUROPÄISCHE PATENTSCHRIFT**

(45) Veröffentlichungstag der Patentschrift: **16.06.82**

(21) Anmeldenummer: **78101281.0**

(22) Anmeldetag: **02.11.78**

(51) Int. Cl.³: **G 03 B  23/00,**
**G 03 B  23/04, G 02 F  1/13**

(54) **Vorrichtung zur optischen Unterdrückung der Bildwechselbewegung in Projektionsgeräten.**

(43) Veröffentlichungstag der Anmeldung:
**14.05.80 Patentblatt 80/10**

(45) Bekanntmachung des Hinweises auf die Patenterteilung:
**16.06.82 Patentblatt 82/24**

(84) Benannte Vertragsstaaten:
**BE CH DE FR GB LU NL**

(56) Entgegenhaltungen:
**CA - A - 973 400**
**DE - A - 1 547 196**
**DE - A - 1 912 229**
**DE - A - 2 558 293**
**DE - A - 2 736 458**
**FR - A - 1 304 976**
**FR - A - 2 111 293**
**GB - A - 990 683**
**US - A - 3 000 258**
**US - A - 4 066 335**

(73) Patentinhaber: **Rollei-Werke Franke & Heidecke GmbH + Co KG**
**Salzdahlumer Strasse 196**
**D-3300 Braunschweig (DE)**

(72) Erfinder: **Proske, Joachim, Dipl.-Phys.**
**Am Hasengarten 41**
**D-3300 Braunschweig (DE)**

(74) Vertreter: **Lins, Edgar, Dipl.-Phys. et al,**
**Patentanwälte Gramm + Lins Theodor-Heuss-Strasse 2**
**D-3300 Braunschweig (DE)**

Courier Press, Leamington Spa, England.

Vorrichtung zur optischen Unterdrückung der Bildwechselbewegung in
Projektionsgeräten

Die Erfindung betrifft eine Vorrichtung zur optischen Unterdrückung der Bildwechselbewegung in Projektionsgeräten mit im Strahlengang verschiebbaren, zu vergrößernden Bildwiedergabeflächen, einem Projektionsobjektiv und einer im Strahlengang während des Bildwechsels wirksamen Lichtschwächungseinrichtung, durch die während des Bildwechsels die Projektionsfläche auf einen Helligkeitswert gebracht wird, der etwa der mittleren Transparenz der Bildwiedergabefläche entspricht.

Bei Mikrofilm-Lesegeräten wird es vom Betrachter als störend und als auf die Dauer für seine Augen ermüdend angesehen, wenn sich die Pupille seitlich oder nach oben oder unter von der eigentlichen Projektionsfläche wegbewegt, weil das auf das gerade vorgeführte Bild akkommodierte Auge an Einzelheiten des Bildes haftenbleibt, ohne daß der Betrachter dies noch bewußt will. Die gleiche Störung des Blickfeldes des Betrachters tritt ein, wenn das neue Bild (Mikrofiche) in die Bildbühne geschoben wird. Das Auge neigt dann dazu, die Bewegung des neuen Bildes über seine Mittelpunktslage hinaus weiter fortzuführen. Durch die DE—A—27 36 458 ist eine Mikro - Informations - Widergabevorrichtung bekannt geworden, bei der durch einen relativ dünnen Behälter, welcher an einer Kante eine Öffnung zur Aufnahme des Mikro-Informations-Trägers und eine von dem Behälter getragene Einrichtung zur schrittweisen Weiterschaltung des Mikro-Informations-Trägers relativ zum Behälter aufweist, diese Nachteile dadurch vermieden werden, daß das Bild nicht seitlich aus der Projektionsfläche herausgeführt wird, sondern wie in einem Überblendvorgang innerhalb der Projektionsfläche verschwindet und das neue Bild in dem selben Maße wie das alte verschwindet in der Projektionsfläche erscheint. Diese Mikro-Informations-Wiedergabevorrichtung mit Schrittschaltung hat aber den Nachteil, daß sie schwer herzustellende Linsenplatten (Lensetten) und aufwendige Lichtleiterbahnen benötigt.

Des weiteren sind um die bei einer Diaprojektion störenden Dukelpausen während eines Diawechsels zu vermeiden, bereits Maßnahmen getroffen worden, mit denen eine gewisse Aufhellung des Bildschirms während eines Diawechsels erreicht wird. Mit der DE—A—19 12 229 ist eine Einrichtung bekannt geworden, bei der zur Schonung der durch ständige Adaptation schnell ermüdenden Augen während des Diawechselvorgangs mittels einer gegenüber dem Projektionslampenlicht erheblichen schwächeren Zusatzlichtquelle und einer für die Zeitdauer des Diawechsels gleichzeitig mit der Rückführung des gerade projizierten Dias in die leere Bildbühne schwenkbaren reflektierenden Blende der Bildschirm aufgehellt wird.

Da die von einer zusätzlichen Schwenkeinrichtung in den Strahlengang geschwenkte Reflexionsblende zwischen Bildbühne und Objektiv angeordnet ist, bleiben dem Auge zwar die eigentlichen Bewegungsvorgänge von Greiferbacken- und Diarahmenkanten, auf die sich das Auge zweifellos einstellen würde, verborgen, die Einschwenkbewegung der Reflexionsblende unmittelbar vor dem Diawechsel bleibt jedoch auch in dieser Vorrichtung für das Auge des Betrachters wahrnehmbar. Dem erreichten Nutzen steht somit nehen einer immer noch vom Auge deutlich wahrnehmbaren Einschwenkbewegung ein erheblicher Aufwand an bewegten Bauteilen im Projektor mit ihrer Anfälligkeit und den dadurch verursachten Mehrkosten entgegen.

Der Erfindung liegt demgegenüber die Aufgabe zugrunde, eine Vorrichtung der eingangs erwähnten Art so auszubilden, daß die durch die Bildwechselbewegung erzeugte Beanspruchung des Auges vermindert wird.

Diese Aufgabe wird erfindungsgemäß dadurch gelöst, daß die Lichtschwächungseinrichtung eine als Diffusor wirkende Flüssigkristallzelle ist, die ständig im Strahlengang angeordnet und mit einer die Flüssigkristallzelle während der Bildwiedergabe transparent und während des Bildwechsels diffus steuernden Steuereinrichtung verbunden ist.

Erfindungsgemäß wird also während des Bildwechsels die Flüssigkristalzelle diffus gesteuert, so daß der Betrachter auf der Projektionsfläche keinen Bildinhalt mehr wahrnimmt, da die diffuse Streuung für eine gewisse Helligkeit auf der Projektionsfläche sorgt, den Bildinhalt aber vollständig verschwinden läßt.

Aus der DE—A—2 558 293 ist es bekannt, eine Flüssigkristallzelle in den Strahlengang einzubringen. Diese hat jedoch die Aufgabe, den Strahlengang vollständig zu unterbrechen und eine vollständige Abdunklung zu bewirken. Dies ist nur mit Flüssigkristallzellen möglich, deren Zellenwände als Polarisationsfilter ausgebildet sind, wobei die Polarisationsebenen gegeneinander gedreht sind. Der Flüssigkristall ist dann bei geeigneter Ansteuerung in der Lage, die Polarisationsebene des durchtretenden Lichtes zu drehen, so daß die Flüssigkristallzelle das eintretende Licht vollständig durchlassen kann oder aber abschwächen kann, wobei die Abschwächung bis zum vollständigen Abdunkeln gehen kann. Derartige Flüssigkristallzellen sind für die erfindungsgemäße Vorrichtung unbrauchbar, da die erfindungsgemäß wirkende Flüssigkristallzelle als Diffusor verwendbar sein muß.

In einer vorteilhaften Ausgestaltung der Erfindung ist die Flüssigkristallzelle im Projektionsstrahlengang zwischen einer Bildbühne und einem Projektionsobjektiv angeordnet, wobei der Abstand zum Projektionsobjektiv gegenüber dem Abstand zur Bildühne variierbar ist. Die Variation wird je nach Größe der Unschärfe und der Begrenzung des projizierten Bildes in Richtung der Projektionsachse durch eine Stellgetriebe vorgenommen. Die Flüssigkristallzelle befindet sich dabei ständig im Projektionsstrahlengang. Diese Anordnung hat den Vorteil, daß der Abstand der Flüssigkristallzelle vom Objektiv bzw. von der Bildwechselebene beliebig vom Vorführenden variiert werden kann, um so die für seine Vorführmöglichkeiten optimale Dunkelpauseneinstellung zu erzielen. Bei Einstellung der Flüssigkristallzelle nahe der Bildwechselebene sind beim Bildwechsel zwar noch die die Bilder umrandenden schwarzen Begrenzungsflächen störend bemerkbar, dafür bleibt aber die Bildbegrenzung für das Auge des Betrachters genügend scharf erhalten. Bei Einstellung der Flüssigkristallzelle nahe dem Projektionsobjektiv ist dagegen diese Bildbegrenzung nicht mehr so deutlich vorhanden, dafür machen sich aber die vorbeihuschenden schwarzen Bildbegrenzungsflächen beim Bildwechsel nicht mehr bemerkbar.

In einer besonders zweckmäßigen Ausgestaltung der Erfindung ist die Flüssigkristallzelle im Projektionsobjektiv angeordnet, um den zwischen Bildbühne und Projektionsobjektiv vorhandenen Platz für andere wichtige Funktionsteile, wie z.B. eine Autofokuseinrichtung, auszunutzen. Die Flüssigkristallzelle kann aber je nach Anwendungsfall zwischen zwei Teillinsen auf den innenliegenden Planflächen oder zwischen zwei Linsengruppen angeordnet sein.

Vorteilhaft kann es sein, wenn die die Flüssigkristallzelle aktivierende elektrische Spannung in Abhängigkeit von der Bildwechselbewegung so schaltbar ist, daß der die Bildbühne bewegende Bildwechsler eine mit einem die Flüssigkristallzelle aktivierenden Schalter zusammenwirkende Schaltkurve aufweist und der Schalter während des Bildwechselvorgangs einen Steuerimpuls abgibt. Dabei kann der Schalter je nach Funktionsart der Flüssigkristallzelle auch ein Umschalter sein, der die angelegte Spannung umpolt. Dadurch steuern die Bildwechselvorgänge des Bildwechslers automatisch auch die synchron ablaufenden Schaltvorgänge für die Flüssigkristallzelle, ohne daß aufwendige Schaltmittel oder zusätzliche Antriebsmittel für einen Schalter erforderlich wären.

Die der Erfindung zugrunde liegende Aufgabe wird weiterhin dadurch gelöst, daß die Lichtschwächungseinrichtung eine transparente graue oder farbige Streuscheibe mit in Richtung der Bildwechselbewegung verlaufenden parallelen Linien ist. Die Transparenz der Streuscheibe läßt auf der Projektionsfläche eine Helligkeit entstehen, die der mittleren Transparenz der Bildwiedergabefläche entspricht. Dadurch bleibt der Adaptationszustand des Beobachterauges erhalten. Durch die Gitterlinien, die in Richtung der Bildwechselbewegung verlaufen, bleibt auch der Akkommodationszustand des Beobachterauges während des Diawechsles erhalten. Das Auge kann sich auf die Gitterlinien einstellen, ohne mit den Gitterlinien mitzuwandern, da diese in Richtung des Bildwechsels ausgerichtet sind, so daß die Bildwechselbewegung an den Gitterlinien nicht erkennbar ist. Die Aufrechterhaltung sowohl des Adaptations- als auch des Akkommodationszustandes des Betrachterauges vermindert so die vorseitige Ermüdung des Betrachters.

Bei der Verwendung von einfachen Streuscheiben als Lichtschwächungseinrichtung ist es vorteilhaft, wenn die transparente Streuscheibe in der Ebene der Bildwechselbewegung unmittelbar neben dem Rahmen der Bildwiedergabefläche angeordnet ist und beim Bildwechselvorgang in den Projektionsstrahlengang verschiebbar ist. Die bildbühnennahe Anordnung der Streuscheibe unmittelbar neben der jeweiligen lichtundurchlässigen Diakante verringert die Abdunklung der Projektionsfläche auf einen kaum noch wahrnehmbaren und daher für die Augen nicht mehr als störend empfundenen Wert.

In einer vorteilhaften Ausführungsform ist die erfindungsgemäße Vorrichtung Teil eines Diaprojektors, in dem die Bildwiedergabeflächen durch Dias gebildet sind, wobei die transparente Streuscheibe auf der vom Magazin abgewandten Seite von Greiferbacken für die Dias angeordnet ist und wobei der zwischen Dia und Streuscheibe angeordnete Greiferbacken so ausgebildet ist, daß er den linken Rahmenteil der Streuscheibe bildet, wobei der Greiferbackengrund nahezu bis an die Streuscheibe hereanreicht.

Nachfolgend werden vier Ausführungsbeispiele gemäß der Erfindung anhand von Zeichnungen näher erläutert.

Es zeigen in schematischer perspektivischer Darstellung

Fig. 1a ein querbewegliches Dia in einem Projektionsstrahlengang mit einer Lichtschwächungseinrichtung zwischen Bildbühne und Projektionsobjektiv in Form einer vor dem Projektionsobjektiv angeordneten aufgehellten Flüssigkristallzelle in Projektionsstellung,

Fig. 1b die Anordnung in Fig. 1a, mit eingetrübter Flüssigkristallzelle und einem Diagreifer in Wechselstellung,

Fig. 2a einen Fallschachtprojektor mit Klemmbacken für ein Dia im Bildbühnenbereich mit einer Lichtschwächungseinrichtung wie in Fig. 1a,

Fig. 2b die Anordnung wie in Fig. 2a, bei der sich die Dias in Wechselstellung befinden,

Fig. 3 die Anordnung wie in Fig. 2a mit einer Lichtschwächungseinrichtung, die durch ein Stellgetriebe in der Nähe der Bildbühne positioniert ist,

Fig. 4a nur ein Projektionsobjektiv mit einer zwischen zwei Linsengruppen angeordneten Lichtschwächungseinrichtung,

Fig. 4b nur ein Projektionsobjektiv mit einer zwischen zwei Teillinsenflächen angeordneten Lichtschwächungseinrichtung,

Fig. 5a eine Anordnung ähnlich Fig. 1a, mit neben der Bildbühne im Diagreifer angeordneter Lichtschwächungseinrichtung.

Fig. 5b die Anordnung wie in Fig. 5a mit in Wechselstellung befindlichem Diagreifer.

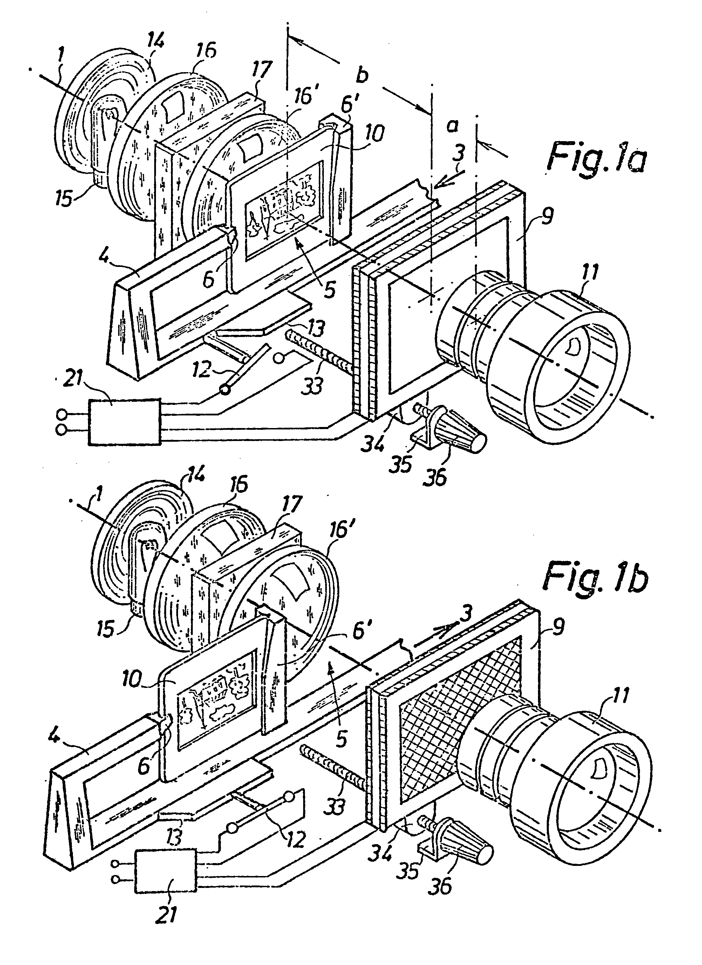

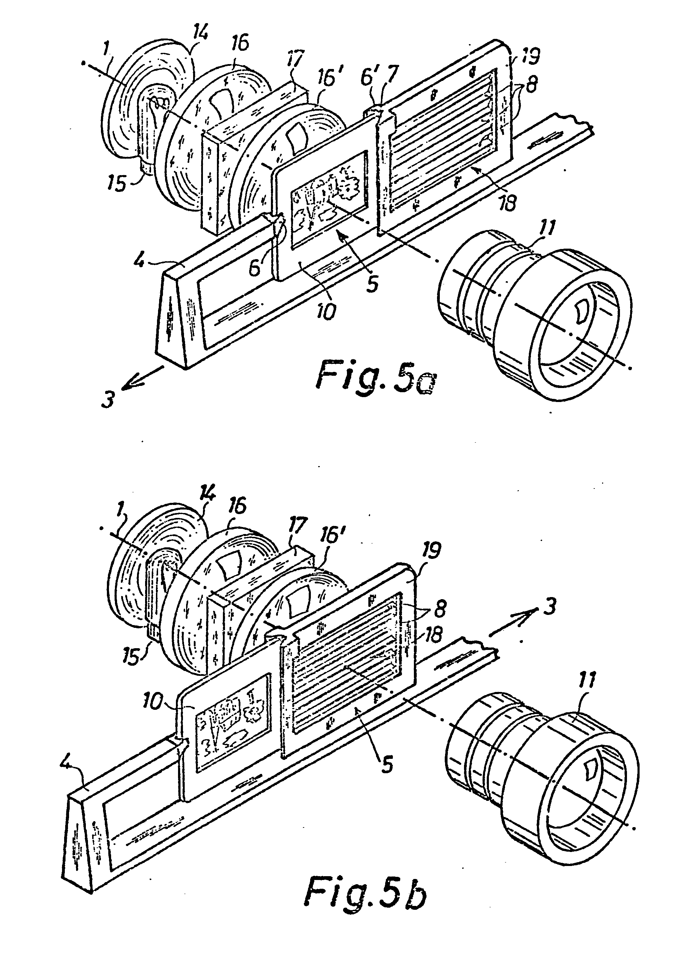

Von einem Diaprojektor mit seitliche geführtem Diamagazin und einer quer zum Projektionsstrahlengang angeordneten Wechselebene sind in den Fig. 1a, 1b, 5a und 5b der einfachheithalber lediglich der Projektionsstrahlengang und die Dia-Wechselebene schematisch dargestellt. Sämtliche nicht zum Projektionsstrahlengang und zur Diawechselebene gehörigen, auch ansich bekannte Antriebe betreffenden Funktions- und Gehäuseteile, die den Gegenstand der Erfindung nicht berühren, sind zwecks besserer Übersichtlichkeit fortgelassen worden.

In Fig. 1a und 1b ist mit 1 der technische Projektionsstrahlengang bezeichnet. Beginnend beim Lampenspiegel 14 über Projektionslampe 15, ersten Kondensor 16, Wärmefilter 17 und einem zweiten Kondensor 16' trifft der Projektionslichtstrahl in der durch einem Pfeil 3 gekennzeichnet Wechselebene auf das Dia 10. Das Dia 10 ist zwischen den Greiferbacken 6, 6' eines Diagreifers 4 in der Bildbühne 5 gehalten.

Vor der Bildbühne 5 ist eine sogenannte Lichtschwächungseinrichtung in Form einer Flüssigkristallzelle 9 vorgesehen.

Um das erfindungsgemäße Ziel, eine "Hellpause" während eines jeden Diawechselvorgangs zu erreichen, ist hier zwischen Bildbühne 5 und Objektiv 11 eine seine Streuwirkung verändernde Flüssigkristallzelle 9, auch als Diffusor bekannt, vorgesehen, deren Wirkweise folgende ist: Durch Anlegen einer elektrischen Spannung wird die Orientierung der Moleküle der Filterkristalle gestört, was visuell als eine diffuse Streuung des Lichts wahrnehmbar ist. Im Fall der parallelen Ausrichtung der Kristallmoleküle treten die auf die Zelle auftreffenden Lichtstrahlen nahezu ungehindert durch sie hindurch (Fig. 1a). Im anderen Fall werden die auf die Zelle auftreffenden Lichtstrahlen an den willkürlich gerichteten Kristallmolekülen diffus abgelenkt (in Fig. 1b durch Kreuzschraffung angedeutet). Die entsprechende Aktivierung der Zelle erfolgt zentral von einer die übrigen elektrischen Funktionen des Diaprojektors steuernden Elektronik 21 aus.

Mit 12 ist ein Schalter bezeichnet, der von einer Schaltkurve 13 am Diagreifer 4 betätigt wird. Die Flüssigkristallzelle ist über ein Stellgetriebe 33 bis 36 längs des Projektionsstrahls verschieblich angeordnet. Die Flüssigkristallzelle 9 befindet sich in den Fig. 1a und 1b in der Nähe des Projektionsobjektivs 11.

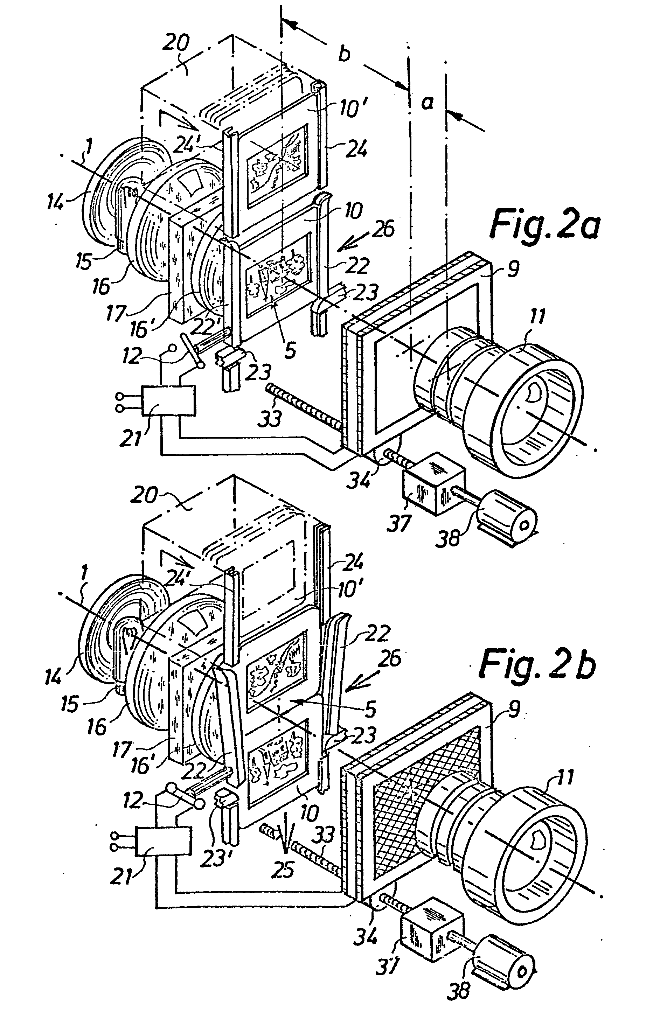

In einem zweiten Ausführungsbeispiel nach der Erfindung wird die Ausbildung einer Hellpause beim Diawechsel in den Figuren 2a und 2b an einem schematisch dargestellten sogenannten Fallschacht-Diaprojektor erläutert: Die aus dem oberen Vorratsbehälter 20 durch die Schwerkraft in die Bildbühne 5 gelangenden und beim Diawechsel in gleicher Weise die Bildbühne in Fallrichtung 25 verlassenden Dias 10, 10' fallen beispielsweise in rascher Folge aneinandergrenzend in Sekundenbruchteilen in die jeweilige Folgeposition (Fig. 2b).

Sollen bei einem solchen in Fallrichtung 25 verlaufenden Diawechsel die möglicherweise noch störende Nebenwirkung einer Dunkelpause ausgeschaltet werden, so ist das durch die Einfügung einer Flüssigkristallzelle 9 in den Projektionsstrahlengang 1 möglich. In Fig. 2a und 2b sind wie schon in den Beispielen zuvor die Teile der Beleuchtungseinrichtung 14, 15, 16, 16' und 17 identisch dargestellt. In der Bildbühne 5 wird das Dia 10 mittels Klemmbacken 22, 22' in Pfeilrichtung 26 zur Projektion fixiert. Die Definition der Höhenlage des Dias und damit die Ausrichtung der Bildmitte auf die Projektionsachse erfolgt durch Anschläge 23, 23'. Beim Diawechsel schwenken die gleichzeitig seitlich führenden Klemmbacken 22, 22' auseinander und die Anschläge 23, 23' ziehen sich zurück, solange bis das Dia 10 die Bildbühne 10 verlassen hat. Die Klemmbacken kehren in ihre Lage zurück, um das aus den Zuführungsschienen 24, 24' unmittelbar oberhalb der Bildbühne 5 herangeführte neue Dia 10' nach erfolgtem Fall in der Bildbühne 5 festzuklemmen. Auch bei dieser Anordnung ist die Flüssigkristallzelle 9 über ein Stellgetriebe 33, 34 und 37 mit Hilfe eines Motors 38 links der Projektionsachse verschieblich angeordnet. Der Schalter 12 zum Steuern der Elektronik 21 bzw. der Flüssigkristallzelle 9 wird durch die Klemmbacke 22 beim Wechselvorgang betätigt.

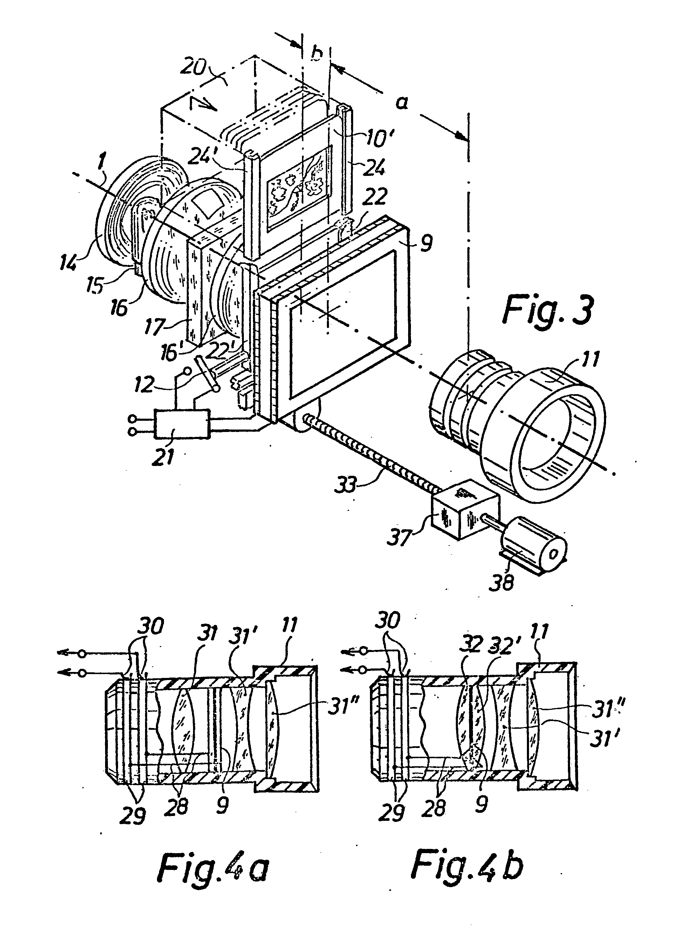

In Fig. 3 ist die gleiche Anordnung wie in den Figuren 2a und 2b dargestellt, die Flüssigkristallzelle 9 befindet sich hier jedoch dicht vor der Bildbühne 5, so daß der Bildbegrenzungsrahmen der Flüssigkristallzelle 9 scharf auf der Projektionsfläche abgebildet wird.

In den Figuren 4a und 4b sind verschiedene Ausführungsformen von Projektionsobjektiven 11 dargestellt. In Fig. 4a liegt eine Flüssigkristallzelle 9 zwischen zwei Linsengruppen 31, 31' und 31". Die elektrischen Zuleitungen 28 für die Flüssigkristallzelle 9 werden über Schleifringe 29 und Schleifer 30 mit einer nicht dargestellten Steuerelektronik 21 verbunden.

In Figur 4b liegt die Flüssigkristallzelle 9 zwischen zwei Teillinsen 32, 32'. Die Linsengruppen 31', 31" liegen rechts neben den Teillinsengruppen 32, 32'. Die elektrischen Zuleitungen erfolgen wie in Fig. 4a beschrieben.

In Fig. 5a und 5b ist mit 1 wieder der technische Projektionsstrahlengang bezeichnet. Beginnend beim Lampenspiegel 14 über die Projektionslampe 15, ersten Kondensor 16, Wärmefilter 17 und einem zweiten Kondensor 16' trifft der Projektionslichtstrahl in der durch einen Pfeil 3 gekennzeichneten Wechselebene auf das Dia 10. Das Dia 10 ist zwischen den Greiferbakcen 6, 6' eines Diagreifers in der Bidlbühne 5 gehalten. Neben der vom Magazin abgewandten Seite der Bildbühne 5 ist eine Streuscheibe 18 vorgesehen. Zur Halterung der Streuscheibe 18 ist an die Greiferbacke 6' in gerader Verlängerung ein rechteckiger Halterahmen 19 wie ein Bildrahmen einstöckig angeformt. Bei einer Wechselbewegung des Diagreifers 4 bewegen sich somit das Dia 10 und die Streuscheibe 18 gleichförmig in Richtung Magazin und zurück. Mit dem Projektionsobjektiv 11 ist schematisch angedeutet, daß hier der geräteseitige Projektionsstrahlengang 1 zur Projektionsfläche hin endet. Die beim Diawechsel in den Strahlengang 1 eintretende Streuscheibe 18 weist eine feine parallele Gitterstruktur auf, die auf der Leinwand als horizontale Querstreifen sichtbar wird (Gitterlinien 8).

Nachfolgend soll anhand der einzelnen den Ausführungsspielen entsprechenden Figuren die Funktionsweise zur Bildung einer "Hellpause" während des Diawechselvorgangs erläutert werden. Die bereits angesprochene Problematik bei der Diaprojektions bezüglich der Ermüdung des Betrachters bildet der Diawechselvorgang, der je nach Projektorenart so vorsich geht, daß einzelne Dias aus einem Magazin oder einem Vorratsbehälter entnommen werden und nach der Projektions wieder in das Magazinfach bzw. in einen entsprechenden Auffangsammelbehälter zurückgeführt werden.

In den Figuren 1a und 1b wird von einem am häufigsten benutzten Projektorentyp mit seitlich neben dem Projektionsstrahlengang geführten Diamagazin ausgegangen. Der das Dia 10 in der Bildbühne 5 haltende Diagreifer 4 bewegt sich beim Diawechsel in Pfeilrichtung 3 der Wechselebene und nimmt das Dia 10 aus seiner Projektionsposition in der Bildbühne 5 mit. Eine Flüssigkristallzelle 9 ist als Diffusor im Projektionsstrahlengang 1 angeordnet. Über eine ohnehin vorhandene Steuerelektronik 21 (nur schematisch als Kasten angedeutet) wird die Flüssigkristallzelle 9 je nach ansich bekanntem Zellenaufbau entweder durch Anlegen einer elektrischen Spannung, im stromlosen oder aber durch Umpolen der Spannung aus dem getrübten diffusen, d.h. das Projektionslicht streuenden in den glasklaren, die Lichtstrahlen nahezu verlustfrei durchlassenden Zustand gesteuert. Die Höhe der jeweils angelegten, z.B. eine Trübung bewirkenden Spannung bestimmt den Grad der Lichtstreuung und damit den noch durch das Objektiv 11 gelangenden, die Helligkeit des Pausenlichtflecks auf der Leinwand ausmachenden diffusen Strahlenanteil. Bei der in den Figuren 1a und 1b im Projektionsstrahlengang 1 angeordneten Flüssigkristallzelle 9 (Zelle) wird ihrer Art nach davon ausgegangen, daß eine spannungslose Zelle durchscheinend ist (Fig. 1a) und eine an Spannung gelegte Zelle trübe wird. Sobald der Diawechsel beginnt, gibt der Schalter 12 an die Steuerelektronik 21 einen Impuls und die Steuerelektronik 21 schaltet die Zelle 9 auf Trübung. Umgekehrt bewirkt der geöffnete Schalter 12 einen Steuerimpuls, um die Zelle 9 wieder stromlos und damit durchscheinend klar zu machen.

Je nach dem funktionellen Aufbau der Zellen kann der trübe oder glasklare Zustand durch Ein-, Aus- oder Umschalten der die Zelle aktivierenden Spannung erfolgen. Bei direkter Aussteuerung der Zelle 9 kann der Schalter 12 demnach einen Arbeits-, Ruhe- oder Umschaltkontakt besitzen. Im dargestellten Falle übt der Schalter 12 stets nur eine Impulsabgabe an die Steuerelektronik 21 aus und diese bestimmt die Beschaltungsart der Zelle.

In Fig. 1a und 1b ist der Abstand der Zelle 9 von der Bildbühne 5 erheblich weiter als der Abstand zum Objektiv 11 dargestellt (in Fig. 1a mit a und b bezeichnet). Diese Besonderheit hat ihren Grund:wäre die Zelle 9 näher zur Bildbühne 5 hin angeordnet, wie in der noch zu beschreibenden Figur 3 schematisch angedeutet, so würde sich der beim Diawechsel an der nahen Zelle vorbeihuschende Diarahmen zusammen mit den Greiferbacken 6' möglicherweise noch als leichter Dunkelfleck bemerkbar machen, da in oder nahe der Diaebene im Bereich der Bildbühne 5 der Diarahmen und der Greiferbakcen 6, 6' noch deutlich auf der Eintrittsfläche der Zelle abgebildet würden. Bei dem in Fig. 1a dargestellten Beispiel efolgt eine solche relativ scharfe Abbildung jedoch nicht mehr und daher ist eine letzte noch mögliche bemerkbare Störung der Dunkelflecken ("Dunkelbalken") auf der Projektionsfläche ausgeschlossen.

Andererseits bewirkt eine Anordnung der Zelle 9 gemäß dem Abstand b (Fig. 3) eine durch die Umfangsbegrenzung der Zelle gebildete noch ausreichend scharfe Bildbegrenzung auf der Projektionsfläche, die sich im Falle des Abstandes a (Fig. 1a) nicht erreichen läßt, so daß sich die beabsichtigte Pausenaufhellung über die gesamte Projektionsfläche und darüberhinaus erstrecken würde.

Je nach dem angewendeten Diawechselsystem und den dabei verwendeten Dias sowie der verwendeten Projektionsfläche (Leinwand) kann daher der Abstand a bzw. b der Zelle 9 vom Objektiv 11 bzw. von der Diawechselebene beliebig vom Vorführenden variiert werden, um so die für seine Vorführmöglichkeiten optimale Dunkelpauseneinstellung zu erzielen. Verwendet der Vorführende z.B. eine frei im Raum stehende Projektionsleinwand, so wird er bestrebt sein, den Abstand b groß zu machen, um so den vorbeihuschenden "Dunkelbalken" zu unterdrücken, jedoch durch die Abmaße der Projektionsleinwand gleichzeit noch eine genügend scharfe Bildbegrenzung aufrechtzuerhalten. Verwendet der Vorführende dagegen eine weiße Wand seines Vorführraumes als Projektionsfläche, so wird er bestrebt sein, den Abstand b so klein zu halten, daß gerade noch bei der Dunkelpause eine genügend scharfe Bildbegrenzung auf der weißen Wand abgebildet wird, wobei aber gleichzeitig der vorbeihuschende "Dunkelbalken" möglichst unscharf abgebildet wird.

Diese einander vorführungsbedingt ausschließenden Gegebenheiten ("Dunkelbalken" und "Bildbegrenzung") können vom Vorführenden durch die Verschiebung der Zelle 9, die über ein Stellgetriebe 33 bis 36 mechanisch längs der Projektionsachse 1 verstellbar ist, in einen den Diabetrachter möglichst wenig ermüdenden Einklang gebracht werden. Das Stellgetriebe besteht aus dem Stellknopf 36, dem Lager 35, der Stellspindel 33 und der Stellmutter 34. In einer weiteren Ausführungsform ist in Fig. 2a und 2b ein sogenannter Fallschacht-Diaprojektor mit dem wie zuvor schon beschriebenen technischen Strahlengang dargestellt. Ein hier vertikaler Diawechsel kann je nach Konstruktionsart z.B. im "Durchfallen" mit aneinanderstoßenden Diarahmen sehr rasch erfolgen. Trotzdem würde ein senkrecht über den Bildschirm huschender dunkler Querbalken, wenn auch äußerst geringfügig, noch als störend empfunden werden. Die Anordnung der Zelle 9 hinsichtlich der Abstände a und b wie in Fig. 1a und 1b dargestellt, und beschrieben, ist in ihrer beabsichtigten Wirkungsweise mit derjenigen in Fig. 2a und 2b nahezu identisch. Nur ist hier die Bildung eines störenden Dunkelfleckes noch weniger wahrscheinlich.

In Fig. 3 ist eine alternative Anordnung der Zelle 9 mit dem geringen Abstand b unmittelbar neben der Diaebene dargestellt. Die Flüssigkristallzelle 9 wird hier durch ein Stellgetriebe 37 mittels eines Elektromotors 38 über eine Spindel 33 axial in Richtung des Projektionsstrahlengangs 1 verschoben.

Da der zwischen Bildbühne 5 und Projektionsobjektiv 11 vorhandene Platz relativ gering ist und meist durch andere wichtige Funktionsteile eines Diaprojektors ausgefüllt sein kann, bietet sich die Unterbringung der Zelle 9 innerhalb des Projektionsobjektivs 11 an. In Fig. 4a und 4b sind Möglichkeiten der Anordnung der Zelle innerhalb des Projektionsobjektivs dargestellt. Wie in Fig. 4a gezeigt, kann die Zelle 9 sowohl zwischen zwei Linsengruppen 31, 31' als auch wie in Fig. 4b dargestellt, zwischen den Planflächen zweier Teillinsen 32, 32' angeordnet sein. In Fig. 4b ist je eine transparente Elektrode der Zelle 9 unmittelbar auf der Planfläche einer Teillinse 32, 32' aufgebracht. Die elektrische Zuleitung der Elektroden verläuft über Zuleitungen 28 innerhalb der Objektivwandung zu den Schleifringen 29 und geräteseitigen Schleifern 30 zur Steuerelektronik 21. Wird für die Ansteuerung einer Zelle 9 eine zentrale elektronische Steuereinheit 21 mitverwendet, so wäre eine weitere Modifikation der Wirkungsweise bei längeren Diawechselpausen der Projektorentypen gemäß Fig. 1a und 1b möglich. Zu Beginn eines von der Steuerelektronik ausgelösten Kommandos "Diawechsel" beginnt nacheinander zunächst eine kontinuierlich verlaufende Trübung der Zelle 9, erst nach Erreichen des vorgegebenen "Hellwertes" setzt sich der Diagreifer 4 in Bewegung. Sobald das neue Dia in der Bildbühne 5 steht, erfolgt das den Wechselvorgang abschließende Kommando "Aufhellen", so daß ein kontinuierliches Hellerwerden bis zur vollen Helligkeit erfolgt. Ein solcher durch kontinuierliche Spannungsregelung an der Zelle 9 hervorgerufene Vorgang wirkt auf den Betrachter etwa wie ein echter Überblendvorgang.

In den Figuren 5a und 5b wird wieder von dem am häufigsten benutzten Projektorentyp mit seitlich neben dem Projektionsstrahlengang 1 geführten Diamagazin ausgegangen. Bei dieser Ausführungsform der Erfindung wird als Lichtschwächungseinrichtung keine Zelle 9 sondern eine Streuscheibe 18 verwendet. Diese Streuscheibe 18 steht auch nicht dauernd im Projektionsstrahlengang wie die Zelle 9 sondern wird auf dem Diagreifer 4 befestigt und nur beim Wechselvorgang in den Projektionsstrahlengang 1 geschoben.

Der das Dia 10 in der Bildbühne 5 haltende Diagreifer 4 bewegt sich beim Diawechsel in Pfeilrichtung 3 der Wechselebene und nimmt das Dia 10 aus seiner Projektionsposition in der Bildbühne 5 mit. Mit Hilfe dieser einfachen Methode gleitet die einstückig an dem Greiferbacken 6' angeformte Lichtschwächungseinrichtung mit der Streuscheibe 18 im gleichen Moment in den Projektionsstrahlengang 1 (Fig. 5b).

Ein wesentliches Funktionsmerkel der Streuscheibe 18 besteht nun darin, die nach wir vor in voller Stärke auf die Streuscheibe 18 auftreffenden Projektionsstrahlen so zu reduzieren, daß nur ein der mittleren Transparenz eines Durchschnittsdias entsprechender Strahlungsanteil durch das Projektionsobjektiv 11 auf die Projektionsfläche gelangt. Bei der in dieser Ausführungsform der Erfindung verwendeten Projektorenart verläuft ein Diawechselvorgang relativ langsam und die Pausendauer ist daher entsprechend lang. Das Auge eines Betrachters bemerkt dabei die seitlich vorbeihuschenden Konturen des Dias auf der Projektionsfläche und die darauf folgende Pause ohne Dia bis zum Eintreten des nächsten Dias, bei dem abermals die Konturen seitlich in den Strahlengang hineinhuschen, ganz bewußt und empfindet dies auf die Dauer als störend und auf längere Zeit als ermüdend.

Um nun eine ständige Adaptation des Auges von einem hellen Diabild zum bisher üblichen schwarz einer Dunkelpause auszuschalten, verbleibt auf der Projektionsfläche ein den Durchlaßgrad der Streuscheibe 18 entsprechender heller Fleck, der so an die mittlere Transparenz der Dias angepaßt ist, daß das Auge des Betrachters eine Adaptation nicht mehr oder nur in sehr geringem Maße vornimmt. Um auch die Akkomodation des Beobachterauges während des Diawechsels zu erhalten, d.h. um dem Beobachterauge keine Veranlassung zu geben, seitlich dem aus dem Projektionsstrahlengang austretenden Dia bzw. der Streuscheibe 18 zu folgen, sind auf der Streuscheibe Gitterlinien 8 in Richtung der Austrittsbewegung aufgebracht. Zusätzlich ist die Greiferbackenfläche der Lichtschwächungseinrichtung besonders schmal ausgebildet und umgreift beinahe den gesamten rechten Rand des Dias 10, damit die sich quer zum Projektionsstrahlengang 1 bewegenden Flächen möglichst klein gehalten werden. Die noch verbleibenden, als schwache Konturen bemerkbaren, von den senkrechten Flächen des rechten Diarahmens und des linken Rahmenteils der Lichtschwächungseinrichtung bzw. des Greiferbackens 6' herrührenden und über die Projektionsleinwand huschenden Dunkelstreifen werden so auf ein erträgliches Minimum reduziert. Der rechte Greiferbacken 6' ist dabei so ausgebildet, daß er auch den linken Rahmenteil der Lichtschwächungseinrichtung bildet, wobei der Greiferbackengrund 7 nahezu bis an die Streuscheibe 18 heranreicht. Dadurch wird eine sichere Führung des Dias 10 und eine schmale, durch den Projektionsstrahlengang 1 hindurchzuführende dunkle Fläche erreicht. Je kleiner diese durch den Projektionsstrahlengang 1 hindurchzuführende Fläche ist, um so geringer ist die Möglichkeit, daß das Auge des Betrachters durch sie beeinflußt und damit aus seinem Akkomodationszustand herausgerissen wird. Das Ergebnis dieser Bemühungen, den Adaptations- und den Akkomodationszustand des Auges nach Möglichkeit auch beim Diawechsel aufrechtzuerhalten, besteht darin, daß auch bei längerer Vorführdauer das Auge des Betrachters nicht mehr ermüdet.

**Patentansprüche**

1. Vorrichtung zur optischen Unterdrückung der Bildwechselbewegung in Projektionsgeräten mit im Strahlengang (1) verschiebbaren, zu vergrößernden Bildwiedergabeflächen, einem Projektionsobjektiv (11) und einer im Strahlengang (1) während des Bildwechsels wirksamen Lichtschwächungseinrichtung durch die während des Bildwechsels die Projektionsfläche auf einen Helligkeitswert gebracht wird, der etwa der mittleren Transparenz der Bildwiedergabefläche entspricht, dadurch gekennzeichnet, daß die Lichtschwächungseinrichtung eine als Diffusor wirkende Flüssigkristallzelle (9) ist, die ständig im Strahlengang (1) angeordnet und mit einer die Flüssigkristallzelle (9) während der Bildwiedergabe transparent und während des Bildwechsels diffus steuernden Steuereinrichtung (21) verbunden ist.

2. Vorrichtung nach Anspruch 1, dadurch gekennzeichnet, daß die Flüssigkristallzelle (9) im Projektionsstrahlengang (1) zwischen einer Bildbühne (5) und einem Projektionsobjektiv (11) angeordnet ist, wobei der Abstand (a) zum Projektionsobjektiv (11) gegenüber dem Abstand (b) zur Bildbühne (5) variierbar ist.

3. Vorrichtung nach Anspruch 1, dadurch gekennzeichnet, daß die Flüssigkristallzelle (9) im Projektionsobjektiv (11) angeordnet ist.

4. Vorrichtung nach Anspruch 3, dadurch gekennzeichnet, daß die Flüssigkristallzelle (9) zwischen zwei Linsengruppen (31, 31') angeordnet ist.

5. Vorrichtung nach Anspruch 3, dadurch gekennzeichnet, daß die Flüssigkristallzelle (9) zwischen zwei Teillinsen (32, 32') angeordnet ist, und die transparenten Elektroden der Flüssigkristallzelle (9) unmittelbar auf den innenliegenden Planflächen beider Teillinsen (32, 32') aufgebracht sind.

6. Vorrichtung nach einem der Ansprüche 1 bis 5, dadurch gekennzeichnet, daß eine die Flüssigkristallzelle (9) aktivierende elektrische Spannung in Abhängigkeit von der Bildwechselbewegung dadurch schaltbar ist, daß der die Bildbühne (5) bewegende Bildwechsler eine mit einem die Flüssigkristallzelle (9) aktivierenden Schalter (12) zusammenwirkende Schaltkurve (13) aufweist und der Schalter (12) während des Bildwechselvorgangs einen Steuerimpuls abgibt.

7. Vorrichtung zur optischen Unterdrückung der Bildwechselbewegung in Projektionsgeräten mit im Strahlengang (1) verschiebbaren, zu vergrößernden Bildwiedergabeflächen, einem Projektionsobjektiv (11) und einer im Strahlengang (1) während des Bildwechsels wirksamen Lichtschwächungseinrichtung in Forme eines Filters durch die während des Bildwechsels die Projektionsfläche auf einen Helligkeitswert gebracht wird, der etwa der mittleren Transparenz der Bildwiedergabefläche entspricht, dadurch gekennzeichnet, daß die Lichtschwächungseinrichtung eine transparente graue oder farbige Streuscheibe (18) mit in Richtung der Bildwechselbewegung verlaufenden parallelen Linien (8) ist.

8. Vorrichtung nach Anspruch 7, dadurch gekennzeichnet, daß die transparente Streuscheibe (18) in der Ebene der Bildwechselbewegung unmittelbar neben dem Rahmen (6') der Bildwiedergabefläche angeordnet ist und beim Bildwechselvorgang in den Projektionsstrahlengang (1) verschiebbar ist.

9. Vorrichtung nach Anspruch 7 oder 8, als Teil eines Diaprojektors, in dem die Bildwiedergabeflächen durch Dias gebildet sind, dadurch gekennzeichnet, daß die transparente Streuscheibe (18) auf der vom Magazin abgewandten Seite von Greiferbacken (6') für die Dias angeordnet ist, und daß der zwischen Dia und Streuscheibe (18) angeordnete Greiferbacken (6') so ausgebildet ist, daß er den linken Rahmenteil der Streuscheibe (18) bildet, wobei der Greiferbackengrund (7) nahezu bis an die Streuscheibe (18) heranreicht.

## Claims

1. Device for visual suppression of the frame changing movement in projection devices with image reproduction surfaces which are to be enlarged and are movable in the path of the rays (1), with a projection lens (11) and a light dimming device in the path of the rays (1) which is effective during the frame change and through which the projection surface is given a brightness value during frame change, which roughly corresponds to the medium transparence of the image reproduction surface, characterised in that the light dimming device is a liquid crystal cell (9) acting as a diffusor which is arranged in the path of the rays (1) and is connected with a control device (21) for controlling the liquid crystal cell (9) so as to be transparent during image reproduction and to diffuse during frame change.

2. Device according to Claim 1, characterised in that the liquid crystal cell (9) is arranged in the path of the projection rays (1) between a frame holder (5) and a projection lens (11), whereby the distance (a) to the projection lens (11) is variable as compared with the distance (b) to the frame holder (5).

3. Device according to Claim 1, characterised in that the liquid crystal cell (9) is arranged in the projection lens (11).

4. Device according to Claim 3, characterised in that the liquid crystal cell (9) is arranged between two lens groups (31, 31').

5. Device according to Claim 3, characterised in that the liquid crystal cell (9) is arranged between two lens components (32, 32') and in that the transparent electrodes of the liquid crystal cell (9) are placed directly onto the inside plane surfaces of both lens components (32, 32').

6. Device according to one of Claims 1 to 5, characterised in that an electrical voltage activating the liquid crystal cell (9) is switchable as a function of the frame changing movement, in that the frame changer moving the frame holder (5) has a switching cam (13) cooperating with a switch (12) activating the liquid crystal cell (9) and in that the switch emits a control pulse whilst the frame is being changed.

7. Device for visual suppression of the frame changing movement in projection devices with image reproduction surfaces which are to be enlarged and are movable in the path of the rays (1), with a projection lens (11) and a light dimming device in form of a filter which is arranged in the path of the rays (1) and is effective during frame change, through which the projection surface is given a brightness value during frame change, which roughly corresponds to the medium transparence of the image reproduction surface, characterised in that the light dimming device is a transparent grey or coloured diffusing screen (18) with parallel lines (8) extending in the direction of the frame changing movement.

8. Device according to Claim 7, characterised in that the transparent diffusing screen (18) is arranged in the plane of the frame changing movement directly adjacent to the frame (6') of the image reproduction surface and can be moved into the path of the projection rays (1) during frame change.

9. Device according to Claim 7 or 8, as part of a slide projector, in which the image reproduction surfaces are formed by slides, characterised in that the transparent diffusing screen (18) is arranged on that side of the slide grips (6') which faces away from the magazine, and in that the grip (6') arranged between slide and diffusing screen (18) is shaped in such a way that it forms the left frame portion of the diffusing screen (18), whereby the grip base (7) almost touches the diffusing screen (18).

## Revendications

1. Dispositif pour l'atténuation optique du mouvement de changement de vues dans des appareils de projection comportant des surfaces de reproduction d'image destinées à être agrandies, pouvant coulisser dans le trajet (1) des rayons, un objectif de projection (11) et un appareillage affaiblisseur de luminère efficace dans le trajet (1) des rayons pendant le changement de vues, cet appareillage amenant pendant le changement des vues la luminosité de la surface de projection à une valeur correspondant sensiblement à la transparence moyenne de la surface de reproduction d'images, caractérisé en ce que l'appareillage affaiblisseur de luminère est une cellule (9) à cristaux liquides jouant le rôle de diffuseur, qui est placée en permanence sur le trajet (1) des rayons et reliée à un appareillage de commande (21) rendant la cellule (9) transparente pendant la reproduction d'image et diffusante pendant le changement de vues.

2. Dispositif selon la revendication 1, caractérisé en ce que la cellule (9) à cristaux liquides est placée sur le trajet (1) des rayons de projection entre une fenêtre d'image (5) et un objectif de projection (11), sa distance (a) l'objectif de projection (11) étant variable par rapport à sa distance (b) à la fenêtre d'image (5).

3. Dispositif selon la revendication 1, caractérisé en ce que la cellule (9) à cristaux liquides est placée dans l'objectif de projection (11).

4. Dispositif selon la revendication 3, caractérisé en ce que la cellule (9) à cristaux liquides est placée entre deux groupes de lentilles (31, 31').

5. Dispositif selon la revendication 3, caractérisé en ce que la cellule (9) à cristaux liquides est placée entre deux lentilles partielles (32, 32'), et les électrodes transparentes de la cellule (9) sont appliquées directement sur les faces intérieures planes des deux lentilles partielles (32, 32').

6. Dispositif selon l'une des revendications 1 à 5, caractérisé en ce qu'une tension électrique d'excitation de la cellule (9) à cristaux liquides peut être apliquée en fonction du mouvement de changement de vues, en ce sens que le changeur de vues déplaçant le fenêtre d'image (5) comporte une rampe d'enclenchement (13) coopérant avec un interrupteur (12) excitant la cellule (9), ledit interrupteur (12) donnant une impulsion de commande pendant le processus de changement de vues.

7. Dispositif pour l'atténuation optique du mouvement de changement de vues dans des appareils de projection comportant des surfaces de reproduction d'image destinées à être agrandies pouvant coulisser dans le trajet (1) des rayons, un objectif de projection (11) et un appareillage affaiblisseuer de lumière sous forme d'un filtre, efficace dans le trajet (1) des rayons pendant le changement de vues, cet appareillage amenant pendant le changement des vues la luminosité de la surface de projection à une valeur correspondant sensiblement à la transparence moyenne de la surface de reproduction d'images caractérisé en ce que l'appareillage affaiblisseur de lumière est une plaque diffusante (18) transparente grise ou colorée, portant des lignes parallèles à la direction du mouvement de changement de vues.

8. Dispositif selon la revendication 7, caractérisé en ce que la plaque diffusante (18) transparente est placée dans le plan du mouvement de changement de vues tout contre le cadre (6') de la surface de reproduction d'images, et peut être glissée dans le trajet (1) des rayons de projection lors du changement des vues.

9. Dispositif selon la revendication 7 ou 8, constituant un élément d'un projecteur de vues diapositives où les surfaces de reproduction d'images sont constituées de vues diapositives, caractérisé en ce que la plaque diffusante (18) transparente est disposée sur le côté de mâchoires de préhension (6') pour les vues, opposé au magasin, et en ce que la mâchoire (6') placée entre vue et plaque diffusante (18) est constituée de façon à former la partie gauche du cadre de la plaque diffusante (18) tandies que le fond (7) de la mâchoire atteint presque la plaque diffusante (18).

*Fig. 1a*

*Fig. 1b*

**Fig. 2a**

**Fig. 2b**

**0010554**

Fig. 3

Fig.4a

Fig.4b

*Fig.5a*

*Fig.5b*